# EUROPÄISCHE PATENTSCHRIFT

(11) **EP 2 135 143 B1**
(45) Veröffentlichungstag und Bekanntmachung des Hinweises auf die Patenterteilung: **19.01.2011**
(21) Anmeldenummer: 08736191.1
(22) Anmeldetag: 14.04.2008
(51) Int. Cl.: G05B 19/416

(54) **VERFAHREN UND EINRICHTUNG ZUR BEWEGUNGSFÜHRUNG EINES BEWEGBAREN MASCHINENELEMENTS EINER NUMERISCH GESTEUERTEN MASCHINE**
METHOD AND DEVICE FOR GUIDING THE MOVEMENT OF A MOVABLE MACHINE ELEMENT OF A NUMERICALLY CONTROLLED MACHINE
PROCÉDÉ ET DISPOSITIF POUR GUIDER LE DÉPLACEMENT D'UN ORGANE MOBILE D'UNE MACHINE À COMMANDE NUMÉRIQUE

(30) Priorität: 16.04.2007 DE 102007017780
(43) Veröffentlichungstag der Anmeldung: 23.12.2009
(73) Patentinhaber: Siemens Aktiengesellschaft, 80333 München (DE)
(72) Erfinder: HUANG, Rui, Taicang, 215400 Jiangsu Province (CN); PAPIERNIK, Wolfgang, 91077 Neunkirchen (DE); WESTERMEYER, Wilhelm, 90425 Nürnberg (DE)
(86) Internationale Anmeldenummer: PCT/EP2008/054490
(87) Internationale Veröffentlichungsnummer: WO 2008/125656

(56) Entgegenhaltungen:
- WO-A-2004/102292
- WO-A-2006/063945
- DE-A1- 19 944 607
- US-A- 5 434 489
- US-A1- 2002 188 356

## Beschreibung

Die Erfindung betrifft ein Verfahren und eine Einrichtung zur Bewegungsführung eines bewegbaren Maschinenelements einer numerisch gesteuerten Maschine, wobei eine Bewegungsbahn des Maschinenelements in aufeinander folgenden Bewegungsabschnitte aufgelöst ist, wobei anhand von vorgegebenen Restriktionen von Maschinenachsen eine maximal mögliche Bahngeschwindigkeit, eine maximal mögliche Beschleunigung und ein maximal möglicher Bahnruck gegeben sind, wobei die lokalen Minima der maximal möglichen Bahngeschwindigkeit bestimmt werden.

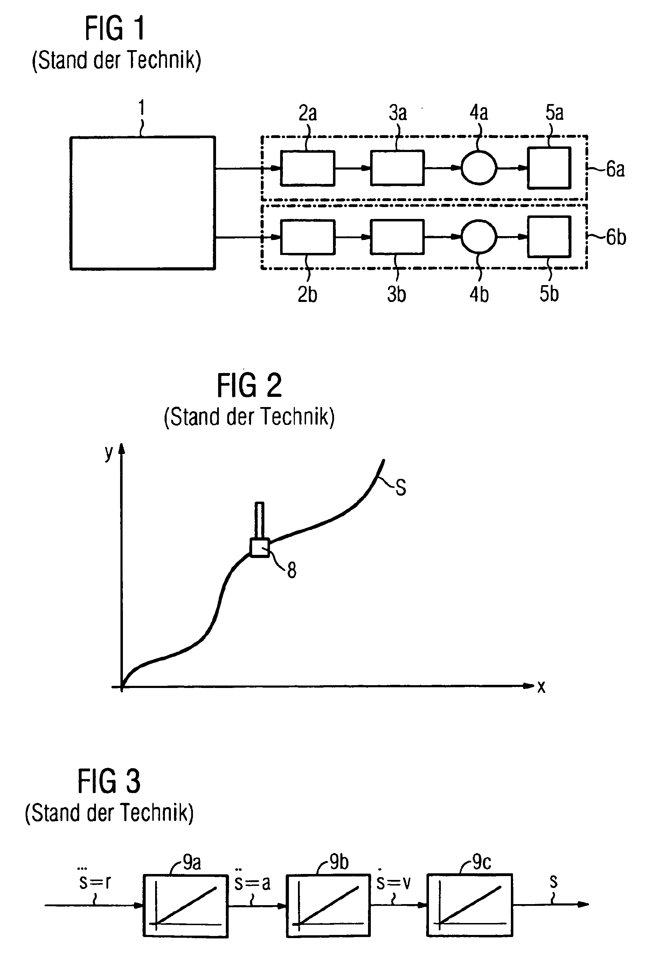

In FIG 1 ist in Form eines Blockschaltbildes ein üblicherweise verwendetes elektrisches Antriebssystem einer Werkzeugmaschine, einer Produktionsmaschine und/oder eines Roboters dargestellt. Eine Steuerung 1 steuert, bei der in FIG 1 beispielhaft dargestellten zweiachsigen Maschine, die beiden Maschinenachsen 6a und 6b der Maschine. Die Maschinenachse 6a setzt sich dabei aus einer Regelung 2a, einem Umrichter 3a, einem Antriebsmotor 4a und einer mit dem Antriebsmotor 4a verbundenen Mechanik 5a zusammen. Die Maschinenachse 6b setzt sich aus einer Regelung 2b, einem Umrichter 3b, einem Antriebsmotor 4b und einer an den Antriebsmotor 4b angeschlossenen Mechanik 5b zusammen. Die Steuerung 1 gibt der Regelung 2a und der Regelung 2b für jede Maschinenachse getrennt Lagesollwerte entsprechend einer vorgegebenen Bewegungsbahn eines mittels der Maschinenachsen 6a und 6b bewegbaren Maschinenelementes vor. Die Regelung 2a bzw. 2b regelt über den Umrichter 3a bzw. 3b den jeweilig zugehörigen Motorlagewinkel des Motors 4a bzw. 4b entsprechend den Sollvorgaben von der Steuerung, so dass mit Hilfe der an den jeweiligen Antriebsmotor 4a bzw. 4b angeschlossenen Mechanik 5a bzw. 5b die vorgegebene Bewegungsbahn des Maschinenelementes ausgeführt wird. Unter einem Maschinenelement ist dabei z.B. während des Bearbeitungsprozesses sowohl ein Werkzeug wie z.B. ein Fräskopf als auch ein Werkstück oder ein anderes beliebiges Element der Maschine zu verstehen.

In FIG 2 ist beispielhaft eine solche Bewegungsbahn S für die zweiachsige Maschine gemäß FIG 1 dargestellt. Dabei wird ein als Fräskopf ausgebildetes Maschinenelement 8 auf der Bewegungsbahn S geführt. Die Maschinenachse 6a aus FIG 1 ist dabei für die Verfahrbewegung in x-Richtung verantwortlich, während die Maschinenachse 6b für die Verfahrbewegung in y-Richtung verantwortlich ist.

Die numerische Steuerung 1 gemäß FIG 1 verarbeitet hierzu Teileprogramme, die z.B. mit einem CAD/CAM-System erstellt worden sind. In der Steuerung 1 sind die geometrischen Daten z.B. für die Bearbeitung eines Werkstückes hinterlegt. Die Aufgabe der Steuerung 1 besteht nun darin, Sollgrößen für die Maschinenachsen der Maschine so zu erzeugen, dass das Maschinenelement 8 auf der gewünschten Bewegungsbahn S geführt wird. Hierzu sind zusätzliche technologische Informationen, insbesondere die Kenntnis der Eigenschaften der Maschine, notwendig. Diese Eigenschaften wie z.B. die maximalen Drehzahlen der Antriebe, die maximale mögliche Beschleunigung der Antriebe bzw. die maximalen Antriebsmomente der Antriebsmotoren sind in Maschinendaten hinterlegt und der Steuerung 1 bekannt. Die Bewegungsführung muss nun von der Steuerung 1 so geplant werden, dass keine der oben genannten vorgegebenen Restriktionen (wie z.B. maximale mögliche Beschleunigung eines Antriebs) verletzt wird. Die hieraus resultierenden Bewegungsprofile der Antriebsmotoren der einzelnen Maschinenachsen der Maschine müssen realisierbar sein. Die Planung der Bewegungsführung verwendet hierzu handelsüblich die zeitlichen Ableitungen der Bahnlänge *s*.

Die prinzipielle Planung einer solchen Bewegungsführung eines Maschinenelements ist in FIG 3 schematisch dargestellt. Entsprechend der vorgegebenen Bewegungsbahn S, mit der vom Maschinenelement 8 durchfahrenen Bahnlänge *s,* wird von der Bewegungsführung der Bahnruck 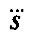 ( 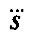 =r(s)) berechnet, der die dreifache zeitliche Ableitung der Bahnlänge s darstellt und der dem in FIG 3 dargestellten so genannten Dreispeichermodell als Eingangsgröße zugeführt wird. Der Bahnruck 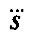 ist in der Integrierkette, die aus den Integrieren 9a, 9b und 9c gebildet wird, die höchste zeitliche Ableitung. Aus dem Bahnruck 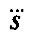 wird eine Bahnbeschleunigung *s̈* (*s̈*=a(s)) berechnet, durch weitere Integration wird aus der Bahnbeschleunigung *s̈* eine Bahngeschwindigkeit *ṡ* (*ṡ*=v(s)) berechnet und durch weitere Integration wird aus der Bahngeschwindigkeit *ṡ* die Bahnlänge s berechnet.

Aus der Bahnlänge *s*, der Bahngeschwindigkeit *ṡ*, der Bahnbeschleunigung *s̈* und dem Bahnruck 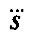 lassen sich, gemäß der für die jeweilige Maschinenkinematik gültigen, dem Fachmann bekannten spezifischen kinematischen Transformation, für jeden an der Bewegung beteiligten Motor der Maschine der zugehörige Motorlagesollwinkel ϕ*_{MS}* , die zugehörige Motorsollwinkelgeschwindigkeit ϕ̇*_{MS},* die zugehörige Motorsollwinkelbeschleunigung ϕ̈*_{MS}* sowie der zugehörige Motorsollwinkelruck 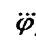 *_{MS}* berechnen. Der jeweilige Motorlagesollwinkel ϕ*_{MS}* bildet den jeweiligen Sollwert für den jeweilig zugehörigen Lageregelkreis der zuständigen Regelung 2a oder 2b gemäß FIG 1 (Pro Maschinenachse wird ein zugehöriger Motorlagesollwinkel ϕ*_{MS}* übergeben). Diese hat sicherzustellen, dass die aktuelle Lage (Position) des Maschinenelementes (z.B. eines Fräskopfes oder eines anderen Werkzeuges oder auch eines Werkstückes) dem vorgegebenen Sollwert folgt.

Durch gezielte Vorgabe der Eingangsgröße Bahnruck 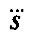 können alle anderen Größen (Bahnbeschleunigung *s̈*, Bahngeschwindigkeit *ṡ* und Bahnlänge *s*) von einem Zustand über geeignete Zwischenwerte in einen anderen durch Integration überführt werden, so dass alle Grenzen überprüft und eingehalten werden können. Die Grenzen legen eine kleinste Zeitdauer des Bearbeitungsvorganges fest. Im Umkehrschluss bedeutet dies, dass die Bewegungsführung nur dann zeitoptimal sein kann, wenn zu jedem Zeitpunkt mindestens eine Größe ihren möglichen Maximalwert erreicht. Die Restriktionen, die bei der Bewegungsführung berücksichtigt werden müssen, haben eine Entsprechung an der realen Maschine. So ergeben z.B. die maximalen Drehzahlen der Antriebe zusammen mit Getriebeübersetzungen und Spindelsteigungen von z.B. Kugelrollspindeln, die maximal mögliche Bahngeschwindigkeit als Grenze.

Anhand der oben beschriebenen vorgegebenen Restriktionen der Maschinenachsen wird nach dem Stand der Technik für die vorgegebene Bewegungsbahn S, die maximal mögliche Bahngeschwindigkeit vlim(s), die maximal mögliche Bahnbeschleunigung alim(s) und der maximal mögliche Bahnruck rlim(s) für die vorgegebene Bewegungsbahn S, die zur Bestimmung in aufeinander folgende Bewegungsabschnitte aufgelöst ist, bestimmt. Dies ist Stand der Technik.

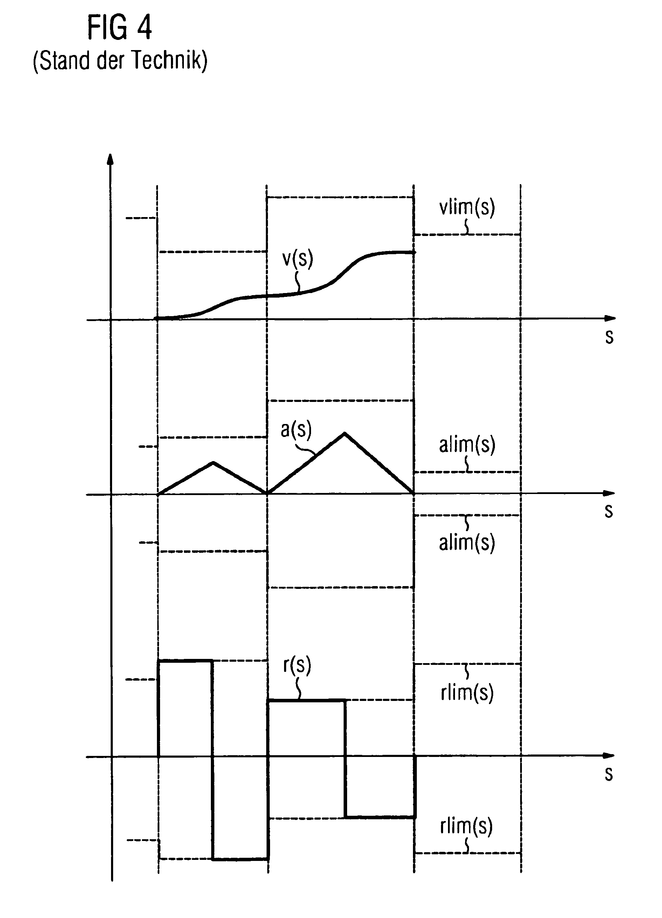

In FIG 4 sind die Verläufe der maximal möglichen Bahngeschwindigkeit vlim(s), der maximal möglichen Bahnbeschleunigung alim(s) und des maximal möglichen Bahnrucks rlim(s) über der Bahnlänge s der Bewegungsbahn S dargestellt. Unter dem Begriff der maximal möglichen Bahnbeschleunigung alim(s) wird dabei sowohl die maximal mögliche Bahnbeschleunigung alim(s) in positiver Richtung d.h. für positive Werte der Bahnbeschleunigung, als auch die maximal möglichen Bahnbeschleunigung alim(s) in negativer Richtung d.h. für negative Werte der Bahnbeschleunigung, verstanden. Unter dem Begriff des maximal möglichen Bahnrucks rlim(s) wird dabei sowohl der maximal mögliche Bahnruck rlim(s) in positiver Richtung d.h. für positive Werte des Bahnrucks, als auch der maximal möglicher Bahnruck rlim(s) in negativer Richtung d.h. für negative Werte des Bahnrucks, verstanden.

Innerhalb dieser vorgegebenen Grenzen soll nun die Bewegungsführung entlang der Bewegungsbahn S so gestaltet werden, dass diese zeitoptimal, d.h. mit möglichst hoher Bahngeschwindigkeit v(s) durchgeführt wird. Handelsüblich wird hierzu die Bewegungsführung so durchgeführt, dass der maximal mögliche Bahnruck rlim(s) voll ausgenutzt wird. Der Ruckverlauf für den Bahnruck r(s) schwankt somit innerhalb eines Bewegungsabschnitts (in FIG 4 sind die Anfänge und Enden der Bewegungsabschnitte durch senkrechte gestrichelte Linien angedeutet) zwischen den beiden Maximalwerten hin und her, wobei beim handelsüblichen Stand der Technik als zusätzliche Bedingung eingehalten werden muss, dass am Ende jedes Bahnabschnitts die Bahnbeschleunigung a(s) einen Wert von Null annimmt. Dabei wird beim handelsüblichen Stand der Technik bewusst in Kauf genommen, dass das solchermaßen ermittelte Bewegungsprofil nicht zeitoptimal ist, d.h. dass insbesondere die maximal mögliche Bahnbeschleunigung alim(s) und die maximal mögliche Bahngeschwindigkeit vlim(s) nur unzureichend ausgeschöpft werden. Da die Bahnlänge s selbst wiederum eine Funktion der Zeit t ist, stellen im mathematischen Sinne die Bahngeschwindigkeit v(s), die Bahnbeschleunigung a(s) und der Bahnruck r(s) so genannte Trajektorien dar und die Darstellung gemäß FIG 4 stellt eine Darstellung in der so genannten Phasenebene dar.

Aus der Offenlegungsschrift WO2006/063945 A1 ist ein Verfahren und eine Einrichtung zur Bewegungsführung eines bewegbaren Maschinenelements einer numerisch gesteuerten Maschine, wobei eine Bewegungsbahn des Maschinenelements in aufeinanderfolgende Bewegungsabschnitte aufgelöst ist, wobei anhand von vorgegebenen Restriktionen von Maschinenachsen eine maximal mögliche Bahngeschwindigkeit, eine maximal mögliche Bahnbeschleunigung und ein maximal möglicher Bahnruck gegeben sind, wobei die lokalen Minima der maximal möglichen Bahngeschwindigkeit bestimmt werden, wobei für jedes lokale Minimum jeweils ein zugehöriges links- und rechtsseitiges Bahngeschwindigkeitssegment bestimmt wird, indem für Bahnwerte der Bewegungsbahn links und rechts eines jeweiligen Minimums unter Ausnutzung des maximal möglichen Bahnrucks und der maximal möglichen Bahnbeschleunigung die Bahngeschwindigkeit solange bestimmt wird, bis die Bahngeschwindigkeit die maximal mögliche Bahngeschwindigkeit links und rechts von dem Minimum überschreitet, wobei solchermaßen ein Bahnruckverlauf für die Bewegungsführung ermittelt wird.

Bei dem in der WO 2006/063945 A1 offenbarten Verfahren ist es dabei nachteilig, dass die Bewegungsführung des Maschinenelements im Sinne einer kürzest möglichen Bearbeitungszeit zwar zeitoptimal erfolgt, aber abhängig vom physikalischen Beschleunigungsvermögen der Antriebe der Maschine sehr wellige Beschleunigungs- und Geschwindigkeitsverläufe entstehen können, die mechanische Eigenschwingungen der Maschine anregen und solchermaßen die Bearbeitungsgüte z.B. hinsichtlich Genauigkeit der Bewegungsführung und/oder Oberflächengüte des bearbeiteten Werkstücks verschlechtern.

Der Erfindung liegt die Aufgabe zugrunde, ein einfaches Verfahren und eine einfache Einrichtung zur Bewegungsführung eines bewegbaren Maschinenelements einer numerisch gesteuerten Maschine zu schaffen, bei der die Restriktion der Maschinenachsen der Maschine möglichst gut ausgenutzt werden, wobei mechanische Eigenschwingungen der Maschine bei der Bewegungsführung wenig angeregt werden.

Diese Aufgabe wird gelöst durch ein Verfahren zur Bewegungsführung eines bewegbaren Maschinenelements einer numerisch gesteuerten Maschine,
- wobei eine Bewegungsbahn des Maschinenelements in aufeinanderfolgende Bewegungsabschnitte aufgelöst ist,
- wobei anhand von vorgegebenen Restriktionen von Maschinenachsen ein maximal möglicher Bahngeschwindigkeitsverlauf, ein maximal möglicher Bahnbeschleunigungsverlauf und ein maximal möglicher Bahnruckverlauf gegeben sind,
- wobei die lokalen Minima des maximal möglichen Bahngeschwindigkeitsverlaufs bestimmt werden,
- wobei für jedes lokale Minimum jeweils ein zugehöriges links- und rechtsseitiges Bahngeschwindigkeitssegment bestimmt wird, indem für Bahnwerte der Bewegungsbahn links und rechts eines jeweiligen Minimums die Bahngeschwindigkeit solange bestimmt wird, bis die Bahngeschwindigkeit den maximal möglichen Bahngeschwindigkeitsverlauf links und rechts von dem Minimum überschreitet, wobei die Bestimmung der Bahngeschwindigkeit derart erfolgt, dass an den Unstetigkeitssprungstellen des maximal möglichen Bahngeschwindigkeitsverlaufs an denen der maximal möglichen Bahnruckverlauf und der maximal mögliche Bahnbeschleunigungsverlauf es zulassen, die Bahngeschwindigkeit durch das untere Niveau der Unstetigkeitssprungstellen des maximal möglichen Bahngeschwindigkeitsverlaufs verläuft und bei ansteigendem Verlauf des maximal möglichen Bahngeschwindigkeitsverlaufs das untere Niveau der Unstetigkeitssprungstellen vor den jeweiligen Unstetigkeitssprungstellen nicht erreicht.

Weiterhin wird diese Aufgabe gelöst durch eine Einrichtung zur Bewegungsführung eines bewegbaren Maschinenelements einer numerisch gesteuerten Maschine, wobei eine Bewegungsbahn des Maschinenelements in aufeinanderfolgende Bewegungsabschnitte aufgelöst ist, aufweisend,
- eine Vorgabeeinheit, die zur Vorgabe eines maximal möglichen Bahngeschwindigkeitsverlaufs, eines maximal möglichen Bahnbeschleunigungsverlaufs und eines maximal möglichen Bahnruckverlaufs anhand von vorgegebenen Restriktionen von Maschinenachsen eingerichtet ist,
- eine Minimabestimmungseinheit, die zur Bestimmung der lokalen Minima des maximal möglichen Bahngeschwindigkeitsverlaufs eingerichtet ist, und
- eine Bahngeschwindigkeitssegmentbestimmungseinheit, wobei die Bahngeschwindigkeitssegmentbestimmungseinheit eingerichtet ist zur Bestimmung ein für jedes lokale Minimum jeweils zugehörige links- und rechtsseitiges Bahngeschwindigkeitssegment, indem für Bahnwerte der Bewegungsbahn links und rechts eines jeweiligen Minimums die Bahngeschwindigkeit solange bestimmt wird, bis die Bahngeschwindigkeit den maximal möglichen Bahngeschwindigkeitsverlauf links und rechts von dem Minimum überschreitet, wobei die Bestimmung der Bahngeschwindigkeit derart erfolgt, dass an den Unstetigkeitssprungstellen des maximal möglichen Bahngeschwindigkeitsverlaufs an denen der maximal mögliche Bahnruckverlauf und der maximal mögliche Bahnbeschleunigungsverlauf es zulassen, die Bahngeschwindigkeit durch das untere Niveau der Unstetigkeitssprungstellen des maximal möglichen Bahngeschwindigkeitsverlaufs verläuft und bei ansteigendem Verlauf der maximal mögliche Bahngeschwindigkeitsverlauf das untere Niveau der Unstetigkeitssprungstellen vor den jeweiligen Unstetigkeitssprungstellen nicht erreicht.

Für die Erfindung erweist es sich als vorteilhaft, wenn einander benachbarte Bahngeschwindigkeitssegmente zweier benachbarter Minima unter Einhaltung des maximal möglichen Bahnruckverlaufs und des maximal möglichen Bahnbeschleunigungsverlaufs derart miteinander verbunden werden, dass in mindestens einem Verbindungspunkt die Bahnbeschleunigung einen Wert von Null annimmt. Dies stellt eine besonders einfache Möglichkeit dar, die Bahngeschwindigkeitssegmente miteinander zu verbinden und die geforderte Bedingung nach zweifacher stetiger Differenzierbarkeit der Bahnlänge s nach der Zeit t einzuhalten.

Weiterhin erweist es sich als vorteilhaft, wenn in mindestens zwei Verbindungspunkten die Bahnbeschleunigung einen Wert von Null annimmt.

Ferner erweist es sich als vorteilhaft, wenn in mehr wie zwei Verbindungspunkten die Bahnbeschleunigung einen Wert von Null annimmt.

Ferner erweist es sich als vorteilhaft, wenn die Maschine als Werkzeugmaschine, Produktionsmaschine und/oder als Roboter ausgebildet ist, da auf diesen technischen Gebieten in besonderen Maße Verfahren zur Bewegungsführung von bewegbaren Maschinenelementen gefordert werden.

Weiterhin erweist es sich als vorteilhaft, dass die Einrichtung eine Ruckverlaufsbestimmungseinheit zur Bestimmung eines Ruckverlaufs für die Bewegungsführung aufweist, wobei einander benachbarte Bahngeschwindigkeitssegmente zweier benachbarter Minima unter Einhaltung des maximal möglichen Bahnruckverlaufs und des maximal möglichen Bahnbeschleunigungsverlaufs derart miteinander verbunden werden, dass in mindestens einem Verbindungspunkt die Bahnbeschleunigung einen Wert von Null annimmt. Dies stellt eine besonders einfache Möglichkeit dar, die Bahngeschwindigkeitssegmente miteinander zu verbinden und die geforderte Bedingung nach zweifacher stetiger Differenzierbarkeit der Bahnlänge s nach der Zeit t einzuhalten.

Ferner erweist es sich als vorteilhaft, wenn die Einrichtung als Steuerungseinrichtung zur Steuerung der Maschine ausgebildet ist. Wenn die Einrichtung als Steuerungseinrichtung zur Steuerung der Maschine ausgebildet ist, wird keine separate Steuerungseinrichtung zur Steuerung der Maschine benötigt.

Ferner erweist es sich als vorteilhaft, dass ein Computerprogrammprodukt für die erfindungsgemäße Einrichtung vorgesehen ist, dass Codeabschnitte enthält mit der das erfindungsgemäße Verfahren ausführbar ist.

Vorteilhafte Ausbildungen der Einrichtung ergeben sich analog zu vorteilhaften Ausbildungen des Verfahren und umgekehrt.

Ein Ausführungsbeispiel der Erfindung ist in der Zeichnung dargestellt und wird im Folgenden näher erläutert. Dabei zeigen:
- FIG 1: ein Antriebssystem einer Maschine mit zwei Maschinen- achsen gemäß dem Stand der Technik,
- FIG 2: eine Bewegungsbahn eines Maschinenelements gemäß dem Stand der Technik,
- FIG 3: ein Dreispeichersystem zur Bestimmung der Bewegungs- führung gemäß dem Stand der Technik,
- FIG 4: eine Bestimmung des Bahnrucks gemäß dem Stand der Technik,
- FIG 5: eine Bestimmung von Bahngeschwindigkeitssegmenten ge- mäß dem Stand der Technik,
- FIG 6: eine Bestimmung des Bahnruckverlaufs gemäß dem Stand der Technik,
- FIG 7: eine weitere Bestimmung des Bahnruckverlaufs gemäß dem Stand der Technik,
- FIG 8: eine Bestimmung des Bahnruckverlaufs gemäß dem erfin- dungsgemäßen Verfahren und der erfindungsgemäßen Ein- richtung und
- FIG 9: ein Blockschaltbild einer erfindungsgemäßen Einrich- tung.

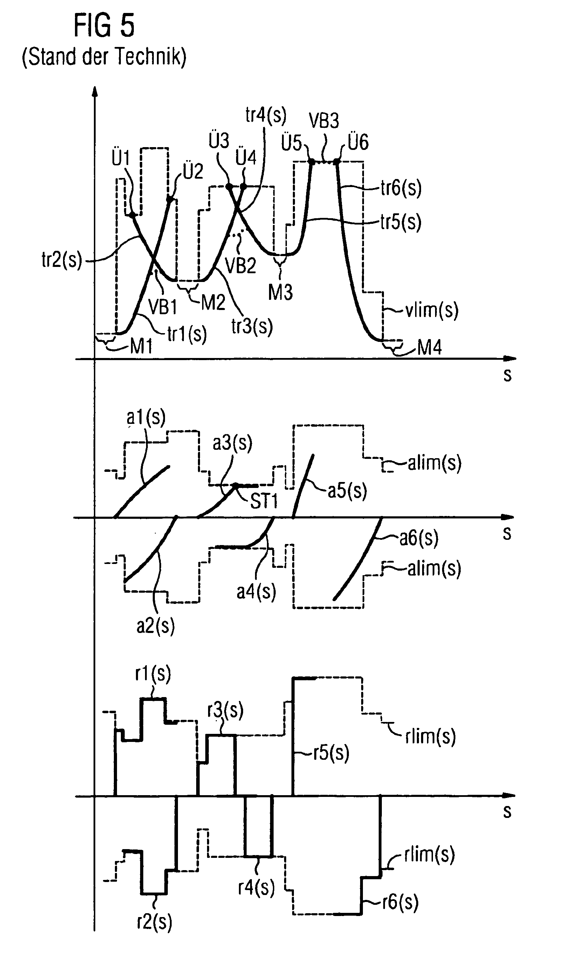

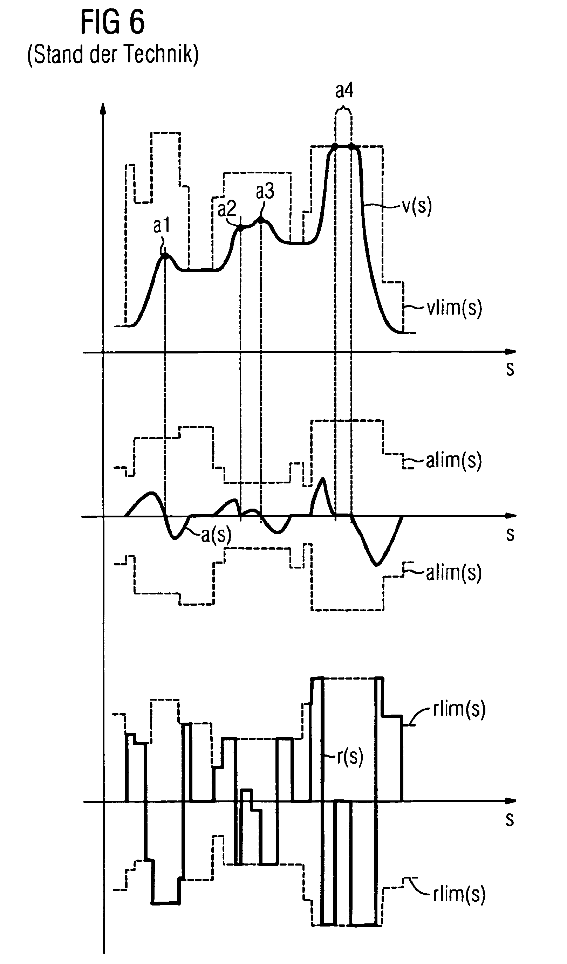

In FIG 5 und FIG 6 ist das in der W02006/063945 A1 offenbarte Verfahren dargestellt.

In FIG 5 und 6 sind die maximal mögliche Bahngeschwindigkeit vlim(s), die maximal mögliche Bahnbeschleunigung alim(s) und der maximal mögliche Bahnruck rlim(s), die dem Verfahren als Grenzwerte vorgegeben werden, über der Bahnlänge s aufgetragen. In einem Verfahrensschritt werden zunächst die lokalen Minima der maximal möglichen Geschwindigkeit vlim(s) bestimmt. Die lokalen Minima sind in FIG 5 mit M1, M2, M3 und M4 bezeichnet. Unter lokalen Minima sind dabei Bereiche zu verstehen, bei denen links und rechts von diesen Bereichen, die maximal mögliche Geschwindigkeit vlim(s) wieder ansteigt. Dabei gelten Anfangs- und Endpunkt der maximal möglichen Geschwindigkeit vlim(s) ebenfalls als lokale Minima.

Anschließend werden links und rechts von einem jeden Minimum ein so genanntes, dem jeweiligen Minimum zugehöriges linksund rechtseitiges Bahngeschwindigkeitssegment, d.h. ein segmentweiser Bahngeschwindigkeitsverlauf v(s), bestimmt. Es ergibt sich somit zu jedem Minimum eine links des jeweiligen Minimum befindliches Bahngeschwindigkeitssegment, nachfolgend linksseitiges Bahngeschwindigkeitssegment genannt und zu jedem Minimum eine rechts des Minimums befindliche zugehöriges Bahngeschwindigkeitssegment nachfolgend rechtsseitiges Bahngeschwindigkeitssegment genannt. Für den in FIG 5 dargestellten Ausschnitt des Bewegungsvorgangs entlang dem Bewegungsbahn S mit der Bahnlänge s ergeben sich somit die linksseitigen Bahngeschwindigkeitssegmente tr2(s), tr4(s) und tr6(s) und die rechtsseitigen Bahngeschwindigkeitssegmenten tr1(s), tr3(s) und tr5(s).

Es wird somit für jedes lokale Minimum M1, M2, M3 und M4 jeweils eine zugehörige links- und rechtsseitiges Bahngeschwindigkeitssegment tr1(s) bis tr6(s) für die einzelnen Bahnwerte der Bahnlänge s links und rechts eines jeweiligen Minimums M1 bis M4 unter Ausnützung des maximal möglichen Bahnrucks rlim (s) und der maximal möglichen Bahnbeschleunigung alim(s) bestimmt, wobei die Bahngeschwindigkeit v(s), d.h. die jeweiligen Bahngeschwindigkeitssegmente tr1(s) bis tr6(s) solange bestimmt werden, bis die Bahngeschwindigkeit v(s) die maximal mögliche Bahngeschwindigkeit vlim(s) links und rechts von dem jeweiligen Minimum überschreitet. Die Stellen an denen die jeweiligen Bahngeschwindigkeitssegmente tr1(s) bis tr6(s), d.h. die Bahngeschwindigkeit v(s) die maximal mögliche Bahngeschwindigkeit vlim(s) überschreitet, sind in FIG 5 mit Ü1 bis Ü6 bezeichnet.

Die Berechnung des jeweiligen Bahngeschwindigkeitssegments tr1(s) bis tr6(s) erfolgt dabei, wie schon gesagt, unter Ausnützung des maximal möglichen Bahnrucks rlim(s) und der maximal möglichen Bahnbeschleunigung alim(s). Die Bahngeschwindigkeitssegmente tr1(s) bis tr6(s) werden bestimmt, in dem für jedes Bahngeschwindigkeitssegment ein optimierter jeweils zugehöriger Ruckverlauf r1(s) bis r6(s) bestimmt wird. Hierzu wird als erstes Optimierungskriterium ein möglichst großer Bahnruck gewählt, d.h. es wird die Bewegung mit dem maximal möglichen Bahnruck rlim(s) ausgeführt. Durch Integration der Bahnruckverläufe r1(s) bis r6(s) über der Zeit t, ergeben sich sie jeweilig zugehörigen Bahnbeschleunigungsverläufe a1(s) bis a6(s). Aus dem Verlauf des Bahnrucks r1(s) ergibt sich beispielsweise die Bahnbeschleunigung a1(s), wobei sich durch nochmalige Integration über der Zeit t aus der Bahnbeschleunigung a1(s) das zugehörige Bahngeschwindigkeitssegment tr1(s) ergibt.

Da wie schon oben gesagt die Bahnlänge s selbst wiederum eine Funktion der Zeit t ist, entspricht in den Figuren 4, 5 und 6 die Integration über der Zeit t einer Integration über der Bahnlänge s.

Bei der Ermittlung des jeweiligen Bahnruckverlaufs r1(s) bis r6(s) wird dabei beachtet, dass die jeweilig zugehörige Bahnbeschleunigung a1(s) bis a6(s), der Bahngeschwindigkeitssegmente tr1(s) bis tr6(s), die maximal mögliche Bahnbeschleunigung alim(s) nicht überschreitet. So wird z.B. der Bahnruck r3(s) sofort auf einen Wert von Null abgesenkt, wenn die zugehörige Bahnbeschleunigung a3(s) für die Bahngeschwindigkeitssegmente tr3(s), z.B. an der Stelle ST1 droht in unzulässiger Weise überschritten zu werden. Auf diese Art und Weise werden durch zweimalige Integration für bestimmte Bewegungsabschnitte aus jedem Ruckverlauf r1(s) bis r6(s) ein jeweilig zugehöriges Bahngeschwindigkeitssegment tr1(s) bis tr6(s) bestimmt.

Für Bahnwerte der Bahnlänge s im Bereich der Minima M1, M2, M3 und M4 wird dabei der zugehörige Bahnruck r(s) als Null angenommen, was in FIG 5 der Übersichtlichkeit halber nicht dargestellt ist, da dort der Übersichtlichkeit halber nur die Verläufe im Bereich der Bahngeschwindigkeitssegmente dargestellt sind.

In einem weiteren Schritt werden nun einander benachbarte Bahngeschwindigkeitssegmente zweier benachbarter Minima unter Einhaltung des maximal möglichen Bahnrucks rlim(s) und der maximal möglichen Bahnbeschleunigung alim(s) derart miteinander verbunden, dass in mindestens einem Verbindungspunkt die Bahnbeschleunigung einen Wert von Null annimmt. Eine Verbindung zwischen benachbarten Bahngeschwindigkeitssegmenten zweier benachbarter Minima besteht dabei aus einer Vielzahl aufeinanderfolgender Verbindungspunkte.

In FIG 5 oben, sind die Verbindungen VB1, VB2 und VB3 punktiert dargestellt. In FIG 5 sind die Bahngeschwindigkeitssegmente tr1(s) und tr2(s) zueinander benachbart. Weiterhin sind die Bahngeschwindigkeitssegmente tr3(s) und die Bahngeschwindigkeitssegmente tr4(s) zueinander benachbart und es sind die Bahngeschwindigkeitssegmente tr5(s) und die Bahngeschwindigkeitssegmente tr6(s) zueinander benachbart. Die jeweiligen Verbindungen VB1 bis VB3 müssen dabei durch Bestimmung eines geeigneten Bahnruckverlaufs r(s) so bestimmt werden, dass in mindestens einem Verbindungspunkt auf jeder Verbindung die Bahnbeschleunigung a(s) einen Wert von Null annimmt. Hierdurch wird die Forderung nach zweifacher stetiger Differenzierbarkeit der Bahnlänge s nach der Zeit t erfüllt.

Ausgehend von dem im vorigen Schritt in FIG 5 unten dargestellten Verlauf des Bahnrucks r(s) für die einzelnen Bahngeschwindigkeitssegmente wird der Verlauf des Bahnrucks r(s) dermaßen angepasst, dass sich bei jeder Verbindung, in mindestens einem Verbindungspunkt der Verbindung, die Bahnbeschleunigung a(s) einen Wert von Null annimmt.

In FIG 6 sind die entsprechenden resultierenden Verläufe der Bahngeschwindigkeit v(s), der Bahnbeschleunigung a(s) und des Bahnrucks r(s) dargestellt. Dabei wurden die benachbarten Bahngeschwindigkeitssegmente tr1(s) und tr2(s) derart miteinander verbunden, dass sich gemäß FIG 6 genau ein Verbindungspunkt a1 bei dem Bahnbeschleunigung a(s) einen Wert von Null annimmt, verbunden. Die benachbarten Bahngeschwindigkeitssegmente tr3(s) und tr4(s) wurden derart miteinander verbunden, dass in mindestens zwei Verbindungspunkten a2 und a3 die Bahnbeschleunigung a(s) einen Wert von Null annimmt. Die benachbarten Bahngeschwindigkeitssegmente tr5(s) und tr6(s) sind im Ausführungsbeispiel derart miteinander verbunden das in mehr als zwei Verbindungspunkten die Bahnbeschleunigung a(s) einen Wert von Null annimmt, was in FIG 6 durch einen Bereich a4 gekennzeichnet ist. Selbstverständlich muss der Verlauf des Bahnruckes r(s) dabei so angepasst werden, dass die maximal mögliche Bahnbeschleunigung alim(s) und maximal möglicher Bahnruck rlim(s) eingehalten werden.

Die Bestimmung des Verlaufs des Bahnrucks r(s), mit dem Ziel eine zweimal nach der Zeit stetig differenzierbaren Verbindung zwischen einander benachbarten Bahngeschwindigkeitssegmenten herzustellen, geschieht mit Hilfe dem Fachmann allgemein bekannter numerischer Lösungsverfahren wie z.B. dem Bisektionsverfahren. Bisektionsverfahren sind numerische Suchverfahren, die die Lösungen durch wiederholte Teilung in einem bestimmten Intervall näherungsweise bestimmen. In der Druckschrift "Numerische Mathematik 1, Lineare und nichtlineare Gleichungssysteme, Interpolation, numerische Integration; Jochen Werner; Vieweg-Studium; Bd. 32: Aufbaukurs Mathematik; 1992" sind Bisektionsverfahren beschrieben.

Der Verlauf des Bahnrucks r(s) wird dabei vorzugsweise unter der weiteren Nebenbedingung so bestimmt, dass im Bereich der Verbindung die Bahngeschwindigkeit v(s) möglichst groß ist.

Wie aus dem Verlauf der Bahngeschwindigkeit v(s) von FIG 6 oben ersichtlich ist, ergibt sich ein Verlauf für die Bahngeschwindigkeit v(s) der relativ nahe an dem maximal möglichen Verlauf der maximal möglichen Bahngeschwindigkeit vlim(s) liegt. Die Bewegungsführung des bewegbaren Maschinenelementes der numerisch gesteuerten Maschine erfolgt somit mit möglichst hoher Geschwindigkeit. Der Optimierungsgrad des Verlaufs der Bahngeschwindigkeit v(s) ist gegenüber dem mit dem handelsüblichen Verfahren bestimmten und in FIG 4 dargestellte Verlaufs der Bahngeschwindigkeit v(s), beim Verfahren gemäß der WO 2006/063945 A1 erhöht.

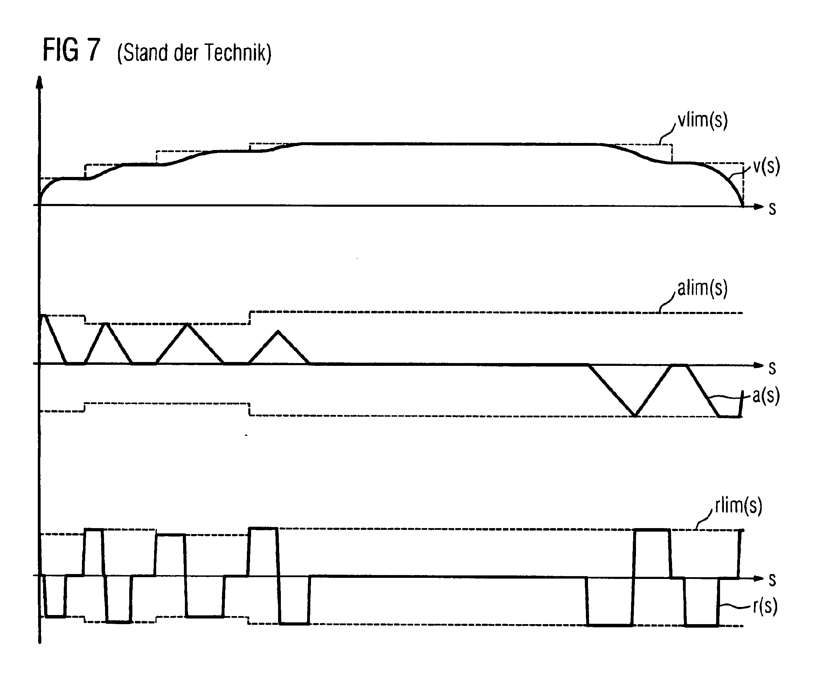

In FIG 7 sind weitere resultierende Verläufe der Bahngeschwindigkeit v(s), der Bahnbeschleunigung a(s) und des Bahnrucks r(s), die sich bei Durchführung des Verfahrens gemäß der WO 2006/063945 A1 ergeben, dargestellt. Wie sich aus FIG 7 leicht entnehmen lässt, verläuft die Bahngeschwindigkeit v(s) relativ nahe an der maximal möglichen Bahngeschwindigkeit vlim(s), jedoch weisen die Verläufe der Bahnbeschleunigung a(s) und des Bahnrucks r(s) sehr hohe Welligkeiten auf, die mechanische Eigenschwingungen der Maschine anregen und somit die Maschine in Schwingungen versetzt können, was eine verschlechterte Bearbeitungsgüte, z.B. hinsichtlich Genauigkeit der Bewegung und/oder der Oberflächengüte des zu bearbeiteten Werkstücks zur Folge hat.

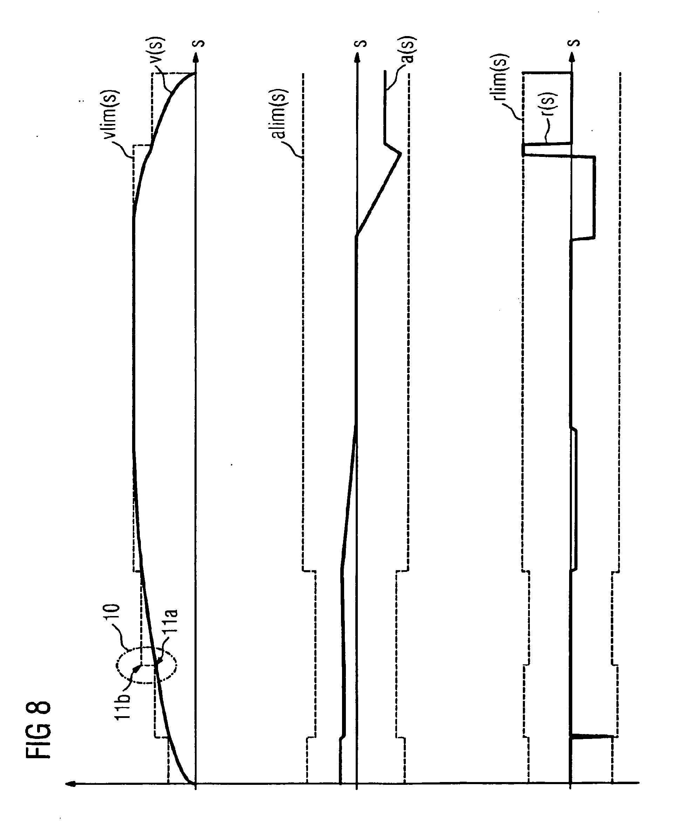

In FIG 8 sind die resultierenden Verläufe der Bahngeschwindigkeit v(s), der Bahnbeschleunigung a(s) und des Bahnrucks, die sich bei Durchführung des erfindungsgemäßen Verfahrens ergeben zum Vergleich gegenüber den Verläufen gemäß FIG 7, dargestellt. Anstatt gemäß der Lehre der WO 2006/063945 A1 zu jedem lokalen Minimum ein zugehöriges links- und rechtsseitiges Bahngeschwindigkeitssegment unter Ausnutzung des maximal möglichen Bahnrucks rlim(s) und der maximal möglichen Bahnbeschleunigung alim(s) zu bestimmen, wird erfindungsgemäß für jedes lokale Minimum M1-M4 (siehe FIG 5) jeweils ein zugehöriges links- und rechtsseitiges Bahngeschwindigkeitssegment tr1(s)-tr6(s) (siehe FIG 5) bestimmt, indem für Bahnwerte (s) der Bewegungsbahn (S) links und rechts eines jeweiligen Minimums M1-M4 die Bahngeschwindigkeit v(s) solange bestimmt wird, bis die Bahngeschwindigkeit v(s) die maximal mögliche Bahngeschwindigkeit vlim(s) links und rechts von dem Minimum M1-M4 überschreitet, wobei die Bestimmung der Bahngeschwindigkeit v(s) derart erfolgt, dass an den Unstetigkeitssprungstellen der maximal möglichen Bahngeschwindigkeit vlim(s) an denen die Einhaltung des maximal möglichen Bahnrucks rlim(s) und der maximal möglichen Bahnbeschleunigung (alim(s)) es zulässt, die Bahngeschwindigkeit v(s) durch das untere Niveau der Unstetigkeitssprungstellen der maximal möglichen Bahngeschwindigkeit vlim(s) verläuft und bei ansteigendem Verlauf der maximal möglichen Bahngeschwindigkeit das untere Niveau (11a) der Unstetigkeitssprungstellen vor den jeweiligen Unstetigkeitssprungstellen nicht erreicht, wobei solchermaßen ein Bahnruckverlauf (r(s)) für die Bewegungsführung ermittelt wird.

Der Verlauf der maximal möglichen Bahngeschwindigkeit vlim(s) weist mehrere Unstetigkeitssprungstellen auf, wobei der Übersichtlichkeit halber in FIG 8 nur eine Unstetigkeitssprungstelle 10 mit einem Bezugszeichen versehen ist. Jede Unstetigkeitssprungstelle weist ein unteres Niveau 11a und ein oberes Niveau 11b auf, wobei das untere Niveau einen kleineren Wert als das obere Niveau aufweist. An den Unstetigkeitssprungstellen weist die maximale mögliche Bahngeschwindigkeit vlim(s) einen Sprung auf. Erfindungsgemäß wird, wenn dies die maximale mögliche Bahnbeschleunigung alims(s) und der maximal mögliche Bahnruck rlims(s) zulassen, der Verlauf der Bahngeschwindigkeit v(s) stets so gewählt, dass die Bahngeschwindigkeit v(s) im Wesentlichen d.h. in der Nähe des unteren Niveaus der Unstetigkeitssprungstellen und insbesondere durch das untere Niveau der Unstetigkeitssprungstellen verläuft und bei ansteigendem Verlauf der maximal möglichen Bahngeschwindigkeit das untere Niveau (11a) der Unstetigkeitssprungstellen vor den jeweiligen Unstetigkeitssprungstellen nicht erreicht (siehe FIG 8).

Die hieraus beim erfindungsgemäßen Verfahren sich ergebenden Verläufe der Bahnbeschleunigung a(s) und des Bahnrucks r(s) sind in FIG 8 dargestellt. Wie aus FIG 8 ersichtlich, weisen beim erfindungsgemäßen Verfahren der Verlauf der Bahnbeschleunigung a(s) und der Verlauf des Bahnrucks r(s) gegenüber dem Verfahren gemäß der WO 2006/063945 A1 eine deutlich reduzierte Welligkeit auf, so dass eine Anregung von Eigenschwingungen der Maschine durch den Bewegungsvorgang des Maschinenelements stark reduziert wird.

An den Unstetigkeitssprungstellen der maximal möglichen Bahngeschwindigkeit vlim(s) an denen die Einhaltung des maximal möglichen Bahnrucks rlims(s) und der maximal möglichen Bahnbeschleunigung alim(s) es nicht zulassen, die Bahngeschwindigkeit v(s) durch die unteren Niveaus der Unstetigkeitssprungstellen der maximal möglichen Bahngeschwindigkeit v(s) verlaufen zu lassen, erfolgt für diese Stellen die Bewegungsführung entweder mit dem maximal möglichen Bahnruck rlims(s) oder der maximal möglichen Bahnbeschleunigung alim(s), je nach dem welche der beiden Begrenzungen rlim(s), alim(s) gerade im Eingriff ist.

Die übrigen Verfahrensschritte des erfindungsgemäßen Verfahrens stimmen mit den Verfahrensschritten gemäß der WO 2006/063945 A1, die oben beschrieben sind, überein.

In den Figuren weisen die Begrenzungen rlim(s) und alim(s) jeweils einen treppenförmigen Verlauf auf. Selbstverständlich funktioniert das erfindungsgemäße Verfahren auch wenn die Begrenzungen einen polynominalen Verlauf aufweisen, wobei jedoch dann in einem vorgehenden Verfahrensschritt aus der polynominalen Begrenzung eine treppenförmige Begrenzung durch Abtastung der polynominalen Begrenzung bestimmt wird, so dass wiederum eine treppenförmige Begrenzung mit entsprechenden Unstetigkeitssprungstellen entsteht, mit der im Anschluss das erfindungsgemäße Verfahren durchgeführt wird.

Selbstverständlich ist es auch denkbar, dass die Verbindungen zwischen benachbarten Bahngeschwindigkeitssegmenten auch auf andere Art und Weise berechnet werden, insbesondere dermaßen berechnet werden, dass in keinem Verbindungspunkt die Bahnbeschleunigung einen Wert von Null annimmt. Es ergeben sich jedoch dann Nachteile hinsichtlich der Stetigkeit der ermittelten Bewegungsbahn s.

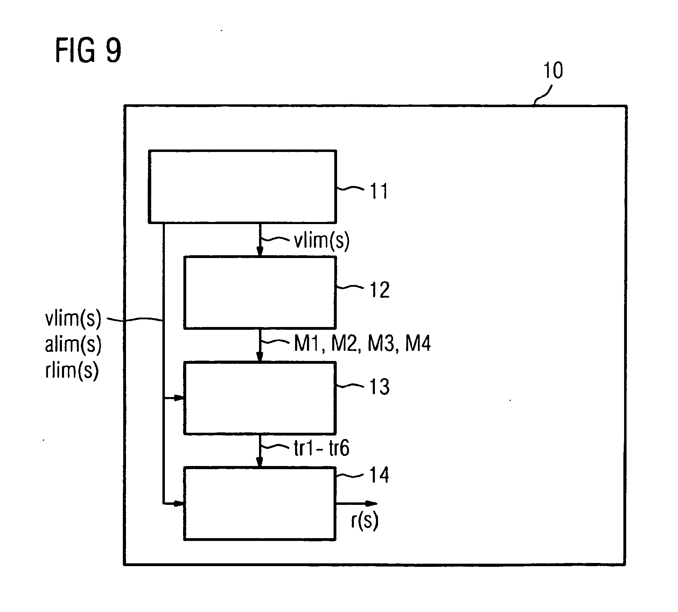

In FIG 9 ist in Form eines Blockschaltbildes eine erfindungsgemäße Einrichtung 10 zur Bewegungsführung eines bewegbaren Maschinenelements einer numerisch gesteuerten Maschine dargestellt, wobei die Einrichtung 10 z.B. in Form einer numerischen Steuerung der Maschine vorliegen kann. Die Einrichtung 10 weist eine Vorgabeeinheit 11 zur Vorgabe der maximal möglichen Bahngeschwindigkeit vlim(s), der maximal möglichen Bahnbeschleunigung alims(s) und des maximal möglichen Bahnrucks rlims(s), anhand von vorgegebenen Restriktionen der Maschinenachsen, auf. Die maximal mögliche Bahngeschwindigkeit vlims(s) wird einer Minimabestimmungseinheit 12 als Eingangsgröße zugeführt, wobei die Minimabestimmungseinheit 12 die Bestimmung der lokalen Minima (M1 bis M4 siehe FIG 5) durchführt. Die bestimmten lokalen Minima werden als Eingangsgröße einer Bahngeschwindigkeitssegmentbestimmungseinheit 13 zusammen mit der maximal möglichen Bahngeschwindigkeit vlim(s), der maximal möglichen Bahnbeschleunigung alim(s) und dem maximal möglichen Bahnruck rlims(s) als Eingangsgröße zugeführt. Die Bahngeschwindigkeitssegmentbestimmungseinheit 13 bestimmt ein für jedes lokale Minimum jeweils zugehöriges links- und rechtsseitiges Bahngeschwindigkeitssegment (tr1 bis tr6 siehe FIG 5), indem für Bahnwerte s der Bewegungsbahn S links und rechts eines jeweiligen Minimums die Bahngeschwindigkeit v(s) solange bestimmt wird, bis die Bahngeschwindigkeit v(s) die maximal mögliche Bahngeschwindigkeit vlim(s) links und rechts von dem Minimum M1 bis M4 überschreitet, wobei die Bestimmung der Bahngeschwindigkeit v(s) derart erfolgt, dass an den Unstetigkeitssprungstellen der maximal möglichen Bahngeschwindigkeit vlim(s) an denen die Einhaltung des maximal mögliche Bahnrucks rlim(s) und der maximal möglichen Bahnbeschleunigung alim(s) es zulassen, die Bahngeschwindigkeit v(s) durch das untere Niveau der Unstetigkeitssprungstellen der maximal möglichen Bahngeschwindigkeit vlim(s) verläuft und bei ansteigendem Verlauf der maximal möglichen Bahngeschwindigkeit das untere Niveau (11a) der Unstetigkeitssprungstellen vor den jeweiligen Unstetigkeitssprungstellen nicht erreicht.

Die solchermaßen bestimmten Bahngeschwindigkeitssegmente (tr1 bis tr6 siehe FIG 5) werden einer Ruckverlaufsbestimmungseinheit 14 zur Bestimmung des Ruckverlaufs r(s) für die Bewegungsführung als Eingangsgröße zusammen mit der maximal möglichen Bahngeschwindigkeit, der maximal möglichen Bahnbeschleunigung und dem maximal möglichen Bahnruck als Eingangsgröße zugeführt, wobei die Ruckverlaufsbestimmungseinheit 14 einander benachbarter Minima unter Einhaltung des maximal möglichen Bahnrucks rlims(s) und der maximal möglichen Bahnbeschleunigung alims(s) derart miteinander verbindet, dass in mindestens einem Verbindungspunkt (a1 bis a4 siehe FIG 6) die Bahnbeschleunigung a(s) einen Wert von Null annimmt.

Die Vorgabeeinheit, die Minimabestimmungseinheit, die Bahngeschwindigkeitssegmentbestimmungseinheit und die Ruckverlaufsbestimmungseinheit sind dabei üblicherweise in Form von Softwarefunktionalitäten als Bestandteil eines Steuerungsprogramms, das auf der Einrichtung 10 abläuft, ausgebildet.

Selbstverständlich können diese jedoch auch in Form von Hardwaremodulen ausgebildet sein.

## Patentansprüche

1. Verfahren zur Bewegungsführung eines bewegbaren Maschinenelements (8) einer numerisch gesteuerten Maschine,
- wobei eine Bewegungsbahn (S) des Maschinenelements (8) in aufeinanderfolgende Bewegungsabschnitte aufgelöst ist,
- wobei anhand von vorgegebenen Restriktionen von Maschinenachsen (6a,6b) ein maximal möglicher Bahngeschwindigkeitsverlauf (vlim(s)), ein maximal möglicher Bahnbeschleunigungsverlauf (alim(s)) und ein maximal möglicher Bahnruckverlauf (rlim(s)) gegeben sind,
- wobei die lokalen Minima (M1-M4) des maximal möglichen Bahngeschwindigkeitsverlaufs (vlim(s)) bestimmt werden,
- wobei für jedes lokale Minimum (M1-M4) jeweils ein zugehöriges links- und rechtsseitiges Bahngeschwindigkeitssegment (tr1(s)-tr6(s)) bestimmt wird, indem für Bahnwerte (s) der Bewegungsbahn (S) links und rechts eines jeweiligen Minimums (M1-M4) die Bahngeschwindigkeit (v(s)) solange bestimmt wird, bis die Bahngeschwindigkeit (v(s)) den maximal möglichen Bahngeschwindigkeitsverlauf (vlim(s)) links und rechts von dem Minimum (M1-M4) überschreitet,
wobei die Bestimmung der Bahngeschwindigkeit (v(s)) derart erfolgt, dass an den Unstetigkeitssprungstellen (10) des maximal möglichen Bahngeschwindigkeitsverlaufs (vlim(s)) an denen der maximal möglichen Bahnruckverlauf (rlim(s)) und der maximal mögliche Bahnbeschleunigungsverlauf (alim(s)) es zulassen, die Bahngeschwindigkeit (v(s)) durch das untere Niveau (11a) der Unstetigkeitssprungstellen des maximal möglichen Bahngeschwindigkeitsverlaufs (vlim(s)) verläuft **dadurch gekennzeichnet, dass** die Bahngeschwindigkeit (v(s)) bei ansteigendem Verlauf des maximal möglichen Bahngeschwindigkeitsverlaufs das untere Niveau (11a) der Unstetigkeitssprungstellen vor den jeweiligen Unstetigkeitssprungstellen nicht erreicht.

2. Verfahren nach Anspruch 1, **dadurch gekennzeichnet, dass** einander benachbarte Bahngeschwindigkeitssegmente (tr1(s)-tr6(s)) zweier benachbarter Minima (M1-M4) unter Einhaltung des maximal möglichen Bahnruckverlaufs (rlim(s)) und des maximal möglichen Bahnbeschleunigungsverlaufs (alim(s)) derart miteinander verbunden werden, dass in mindestens einem Verbindungspunkt (a1-a4) die Bahnbeschleunigung (a(s)) einen Wert von Null annimmt.

3. Verfahren nach Anspruch 2, **dadurch gekennzeichnet, dass** in mindestens zwei verbindungspunkten (a1-a4) die Bahnbeschleunigung (a(s)) einen Wert von Null annimmt.

4. Verfahren nach Anspruch 2, **dadurch gekennzeichnet, dass** in mehr wie zwei Verbindungspunkten (a1-a4) die Bahnbeschleunigung (a(s)) einen Wert von Null annimmt.

5. Verfahren nach einem der vorhergehenden Ansprüche, **dadurch gekennzeichnet, dass** die Maschine als Werkzeugmaschine, als Produktionsmaschine und/oder als Roboter ausgebildet ist.

6. Einrichtung zur Bewegungsführung eines bewegbaren Maschinenelements einer numerisch gesteuerten Maschine wobei eine Bewegungsbahn (S) des Maschinenelements in aufeinanderfolgende Bewegungsabschnitte aufgelöst ist, aufweisend,
- eine Vorgabeeinheit (11), die zur Vorgabe eines maximal möglichen Bahngeschwindigkeitsverlaufs (vlim(s)), eines maximal möglichen Bahnbeschleunigungsverlaufs (alim(s)) und eines maximal möglichen Bahnruckverlaufs (rlim(s)) anhand von vorgegebenen Restriktionen von Maschinenachsen (6a,6b) eingerichtet ist,
- eine Minimabestimmungseinheit (12), die zur Bestimmung der lokalen Minima (M1-M4) des maximal möglichen Bahngeschwindigkeitsverlaufs (vlim(s)) eingerichtet ist, und
- eine Bahngeschwindigkeitssegmentbestimmungseinheit (13), wobei die Bahngeschwindigkeitssegmentbestimmungseinheit (13) eingerichtet ist zur Bestimmung ein für jedes lokale Minimum (M1-M4) jeweils zugehörige links- und rechtsseitiges Bahngeschwindigkeitssegment (tr1(s)-tr6(s)), indem für Bahnwerte (s) der Bewegungsbahn (S) links und rechts eines jeweiligen Minimums (M1-M4) die Bahngeschwindigkeit (v(s)) solange bestimmt wird, bis die Bahngeschwindigkeit (v(s)) den maximal möglichen Bahngeschwindigkeitsverlauf (vlim(s)) links und rechts von dem Minimum (M1-M4) überschreitet, wobei die Bestimmung der Bahngeschwindigkeit (v(s)) derart erfolgt, dass an den Unstetigkeitssprungstellen (10) des maximal möglichen Bahngeschwindigkeitsverlaufs (vlim(s)) an denen der maximal mögliche Bahnruckverlauf (rlim(s)) und der maximal mögliche Bahnbeschleunigungsverlauf (alim(s)) es zulassen, die Bahngeschwindigkeit (v(s)) durch das untere Niveau (11a) der Unstetigkeitssprungstellen des maximal möglichen Bahngeschwindigkeitsverlaufs (vlim(s)) verläuft, **dadurch gekennzeichnet, dass** die Bahngeschwindigkeit (v(s)) bei ansteigendem Verlauf der maximal mögliche Bahngeschwindigkeitsverlauf das untere Niveau (11a) der Unstetigkeitssprungstellen vor den jeweiligen Unstetigkeitssprungstellen nicht erreicht.

7. Einrichtung nach Anspruch 6, **dadurch gekennzeichnet, dass** die Einrichtung eine Ruckverlaufsbestimmungseinheit (14), die zur Bestimmung eines Ruckverlaufs (r(s)) für die Bewegungsführung eingerichtet ist, aufweist, wobei einander benachbarte Bahngeschwindigkeitssegmente (tr1(s)-tr6(s)) zweier benachbarter Minima (M1-M4) unter Einhaltung des maximal möglichen Bahnruckverlaufs (rlim(s)) und des maximal möglichen Bahnbeschleunigungsverlaufs (alim(s)) derart miteinander verbunden werden, dass in mindestens einem Verbindungspunkt (a1-a4) die Bahnbeschleunigung (a(s)) einen Wert von Null annimmt.

8. Einrichtung nach Anspruch 6 oder 7, **dadurch gekennzeichnet, dass** die Einrichtung als Steuerungseinrichtung, die zur Steuerung der Maschine eingerichtet ist, ausgebildet ist.

## Claims

1. Method for guiding the movement of a moving machine element (8) of a numerically controlled machine,
- wherein a movement path (S) of the machine element (8) is broken up into successive movement sections,
- wherein a maximum possible path speed profile (vlim(s)), a maximum possible path acceleration profile (alim(s)) and a maximum possible path jolt profile (rlim(s)) are defined by means of predefined restrictions on machine axles (6a, 6b),
- wherein the local minimum values (M1-M4) of the maximum possible path speed profile (vlim(s)) are determined,
- wherein for each local minimum value (M1-M4) an associated left-hand side and an associated right-hand side path speed segment (tr1(s)-tr6(s)) are respectively determined by the path speed (v(s)) being determined for path values (s) of the movement path (S) to the left and to the right of a respective minimum value (M1-M4) and the maximum possible path acceleration (alim(s)) until the path speed (v(s)) exceeds the maximum possible path speed profile (vlim(s)) to the left and right of the minimum value (M1-M4), wherein the path speed (v(s)) is determined in such a way that, at the discontinuity jump points (10) of the maximum possible path speed profile (vlim(s)) at which the maximum possible path jolt profile (rlim(s)) and the maximum possible path acceleration profile (alim(s)) permit, the path speed (v(s)) runs through the lower level (11a) of the discontinuity jump points of the maximum possible path speed profile (vlim(s)),
**characterized**
- **in that**, given a rising profile of the maximum possible path speed profile, the path speed (v(s)) does not reach the lower level (11a) of the discontinuity jump points before the respective discontinuity jump points.

2. Method according to Claim 1, **characterized in that** adjacent path speed segments (tr1(s)-tr6(s)) of two adjacent minimum values (M1-M4) are connected to one another, while complying with the maximum possible path jolt profile (rlim(s)) and the maximum possible path acceleration profile (alim(s)), in such a way that at at least one connecting point (a1-a4) the path acceleration (a(s)) assumes a value of zero.

3. Method according to Claim 2, **characterized in that** at at least two connecting points (a1-a4) the path acceleration (a(s)) assumes a value of zero.

4. Method according to Claim 2, **characterized in that** at more than two connecting points (a1-a4) the path acceleration (a(s)) assumes a value of zero.

5. Method according to one of the preceding claims, **characterized in that** the machine is embodied as a machine tool, as a production machine and/or as a robot.

6. Device for guiding the movement of a moving machine element of a numerically controlled machine, wherein a movement path (S) of the machine element is broken up into successive movement sections, having
- a predefining unit (11) which is arranged for predefining a maximum possible path speed profile (vlim(s)), a maximum possible path acceleration profile (alim(s)) and a maximum possible path jolt profile (rlim(s)) by means of predefined restrictions on machine axles (6a, 6b),
- a minimum determination unit (12) which is arranged for determining the local minimum values (M1-M4) of the maximum possible path speed profile (vlim(s)), and
- a path speed segment determination unit (13), wherein the path speed segment determination unit (13) is arranged for determining a respectively associated left-hand side and right-hand side path speed segment (tr1(s)-tr6(s)) for each local minimum value (M1-M4) by determining the path speed (v(s)) for path values (s) of the movement path (S) to the left and to the right of a respective minimum (M1-M4) and the maximum possible path acceleration (alim(s)) until the path speed (v(s)) exceeds the maximum possible path speed profile (vlim(s)) to the left and to the right of the minimum value (M1-M4), wherein the path speed (v(s)) is determined in such a way that, at the discontinuity jump points (10) of the maximum possible path speed profile (vlim(s)) at which the maximum possible path jolt profile (rlim(s)) and the maximum possible path acceleration profile (alim(s)) permit, the path speed (v(s)) runs through the lower level (11a) of the discontinuity jump points of the maximum possible path speed profile (vlim(s)),
**characterized**
- **in that**, given a rising profile of the maximum possible path speed profile, the path speed (v(s)) does not reach the lower level (11a) of the discontinuity jump points before the respective discontinuity jump points.

7. Device according to Claim 6, **characterized in that** the device has a jolt profile determination unit (14), which is arranged for determining a jolt profile (r(s)) for the guidance of the movement, wherein adjacent path speed segments (tr1(s)-tr6(s)) of two adjacent minimum values (M1-M4) are connected to one another, while complying with the maximum possible path jolt profile (rlim(s)) and the maximum possible path acceleration profile (alim(s)), in such a way that in at least one connecting point (a1-a4) the path acceleration (a(s)) assumes a value of zero.

8. Device according to Claim 6 or 7, **characterized in that** the device is embodied as a control device, which is arranged for controlling the machine.

## Revendications

1. Procédé pour guider le déplacement d'un organe ( 8 ) mobile d'une machine à commande numérique,
- dans lequel on résout une trajectoire ( S ) de déplacement de l'organe ( 8 ) de la machine en des segments de déplacement successifs,
- dans lequel, au moyen de limitations prescrites d'axes ( 6a, 6b ) de la machine, il y a une courbe ( vlim(s) ) de vitesse possible au maximum sur la trajectoire, une courbe ( alim(s) ) d'accélération possible au maximum sur la trajectoire et une courbe ( rlim(s) ) de retour possible au maximum sur la trajectoire,
- dans lequel on détermine les minima ( M1 à M4 ) locaux de la courbe ( vlim(s) ) de vitesse possible au maximum sur la trajectoire,
- dans lequel, pour chaque minimum ( M1 à M4 ) local, on détermine respectivement un segment ( tr1(s) à tr6(s) ) de vitesse sur la trajectoire associé du côté gauche et du côté droit en déterminant, pour des valeurs ( s ) de la trajectoire ( S ) de déplacement à gauche et à droite d'un minimum ( M1 à M4 ) respectif, la vitesse ( v(s) ) sur la trajectoire jusqu'à ce que la vitesse ( v(s) ) sur la trajectoire dépasse la courbe ( vlim(s) ) de vitesse possible au maximum sur la trajectoire à gauche et à droite du minimum ( M1 à M4 ), dans lequel la détermination de la vitesse ( v(s) ) sur la trajectoire s'effectue, de sorte qu'aux points ( 10 ) de discontinuité de la courbe ( vlim(s) ) de vitesse possible au maximum sur la trajectoire, où la courbe ( rlim(s) ) de retour possible au maximum sur la trajectoire et la courbe ( alim(s) ) d'accélération possible au maximum sur la trajectoire autorisent que la vitesse ( v(s) ) sur la trajectoire passe par le niveau ( 11a ) inférieur des points de discontinuité de la courbe ( vlim(s) ) de vitesse possible au maximum sur la trajectoire,
**caractérisé**
- **en ce que**, si la courbe de vitesse possible au maximum sur la trajectoire est croissante, la vitesse ( v(s) ) sur la trajectoire n'atteint pas le niveau ( 11a ) inférieur des points de discontinuité avant les points de discontinuité respectifs.

2. Procédé suivant la revendication 1, **caractérisé en ce qu'**on relie entre eux des segments ( tr1(s) à tr6(s) ) voisins les uns des autres de vitesse sur la trajectoire de deux minima ( M1 à M4 ) voisins en conservant la courbe ( rlim(s) ) de retour possible au maximum sur la trajectoire et la courbe ( alim(s) ) d'accélération possible au maximum sur la trajectoire, de façon à ce que, dans au moins un point ( a1 à a4 ) de liaison, l'accélération ( a(s) ) sur la trajectoire prenne une valeur de zéro.

3. Procédé suivant la revendication 2, **caractérisé en ce que** l'accélération ( a(s) ) sur la trajectoire prend une valeur de zéro dans au moins deux points ( a1 à a4 ) de liaison.

4. Procédé suivant la revendication 2, **caractérisé en ce que** l'accélération ( a(s) ) sur la trajectoire prend une valeur de zéro dans plus de deux points ( a1 à a4 ) de liaison

5. Procédé suivant l'une des revendications précédentes, **caractérisé en ce que** la machine est constituée en machine-outil, en machine de production et/ou en robot.

6. Dispositif pour guider le déplacement d'un organe mobile d'une machine à commande numérique, une trajectoire ( S ) de déplacement de l'organe de la machine étant résolue en des segments de déplacement successifs, comportant,
- une unité ( 11 ) de prescription, qui est conçue pour la prescription d'une courbe ( vlim(s) ) de vitesse possible au maximum sur la trajectoire, d'une courbe ( alim(s) ) d'accélération possible au maximum sur la trajectoire et d'une courbe ( rlim(s) ) de retour possible au maximum sur la trajectoire à l'aide de limitations prescrites d'axes ( 6a, 6b ) de la machine,
- une unité ( 12 ) de détermination de minima, qui est conçue pour la détermination des minima ( M1 à M4 ) locaux de la courbe ( vlim(s) ) de vitesse possible au maximum sur la trajectoire, et
- une unité ( 13 ) de détermination de segment de vitesse sur la trajectoire, l'unité ( 13 ) de détermination de segment de vitesse sur la trajectoire étant conçue pour la détermination d'un segment ( tr1(s) à tr6(s) ) de vitesse sur la trajectoire du côté gauche et du côté droit associé respectivement à chaque minimum ( M1 à M4 ) local en déterminant, pour des valeurs ( s ) de la trajectoire ( S ) de déplacement à gauche et à droite d'un minimum ( M1 à M4 ) respectif, la vitesse ( v(s) ) sur la trajectoire jusqu'à ce que la vitesse ( v(s) ) sur la trajectoire dépasse à gauche et à droite du minimum ( M1 à M4 ) la courbe ( vlim(s) ) de vitesse possible au maximum sur la trajectoire, la détermination de la vitesse ( v(s) ) sur la trajectoire s'effectuant, de sorte qu'aux points ( 10 ) de discontinuité de la courbe ( vlim(s) ) de vitesse possible au maximum sur la trajectoire où la courbe ( rlim(s) ) de retour possible au maximum sur la trajectoire et la courbe ( alim(s) ) d'accélération possible au maximum sur la trajectoire permettent que la vitesse ( v(s) ) sur la trajectoire passe par le niveau ( 11a ) inférieur des points de discontinuité de la courbe ( vlim(s) ) de vitesse possible au maximum sur la trajectoire,
**caractérisé**
- **en ce que**, si la courbe de vitesse possible au maximum sur la trajectoire est croissante, la vitesse ( v(s) ) sur la trajectoire n'atteint pas le niveau ( 11a ) inférieur des points de discontinuité avant les points de discontinuité respectifs.

7. Dispositif suivant la revendication 6, **caractérisé en ce que** le dispositif a une unité ( 14 ) de détermination de courbe de retour, qui est conçue pour la détermination d'une courbe ( r(s) ) de retour pour le guidage du déplacement, des segments ( tr1(s) à tr6(s) ) voisins les uns des autres de vitesse sur la trajectoire de deux minima ( M1 à M4 ) voisins étant reliés l'un à l'autre en conservant la courbe ( rlim(s) ) de retour possible au maximum sur la trajectoire et la courbe ( alim(s) ) d'accélération possible au maximum sur la trajectoire, de manière à ce que, dans au moins un point ( a1 à a4 ) de liaison, l'accélération ( a (s) ) sur la trajectoire prenne une valeur de zéro.

8. Dispositif suivant la revendication 6 ou 7, **caractérisé en ce que** le dispositif est constitué en dispositif de commande, qui est conçu pour la commande la machine.
